# EUROPÄISCHE PATENTANMELDUNG

(11) **EP 2 716 439 A1**
(43) Veröffentlichungstag der Anmeldung: **09.04.2014**
(21) Anmeldenummer: 13186813.5
(22) Anmeldetag: 01.10.2013
(51) Int. Cl.: B32B 1/08, B32B 7/12, F16L 11/04

(54) **Gegenstand mit mehrschichtiger Außenseite**

(30) Priorität: 04.10.2012 DE 102012218118
(71) Anmelder: egeplast international GmbH, 48268 Greven (DE)
(72) Erfinder: Stranz, Michael, 48268 Greven (DE); Eilers, Werner, 48268 Greven (DE); Dreier, Dirk, 48268 Greven (DE)
(74) Vertreter: von Kreisler Selting Werner

(57) **Zusammenfassung**

Der Gegenstand mit einer Außenseite, die zumindest teilweise aus einem Kunststoffmaterial besteht, insbesondere Mehrschichtrohr, ist mit einem Innenkörper (16) versehen, insbesondere Basisrohr, der eine Außenfläche aufweist. Ferner weist der Gegenstand eine Kunststoff-Außenschicht (12), insbesondere Hüllrohr, auf, die zumindest innerhalb eines Teilbereichs der Außenfläche des Innenkörpers diesen überdeckt. Der Gegenstand ist mit einer zwischen der Außenfläche des Innenkörpers (16) und der Außenschicht(12) angeordneten, eine Zerreißfestigkeit aufweisenden Kunststoff-Haftvermittlerschicht (14) zur Fixierung der Außenschicht (12) an der Außenfläche des Innenkörpers (16) durch Erzeugung von Haftkräften zur Außenfläche des Innenkörpers (16) und zur Außenschicht (12) versehen. Die Haftkraft der Haftvermittlerschicht (14) weist zur Außenfläche des Innenkörpers (16) einen ersten Haftkraftwert und die Haftkraft der Haftvermittlerschicht (14) zur Außenschicht (12) einen zweiten Haftkraftwert auf. Der erste Haftkraftwert ist größer als der zweite Haftkraftwert und zusätzlich ist der erste Haftkraftwert kleiner sowie der zweite Haftkraftwert größer als die Zerreißfestigkeit der Haftvermittlerschicht (14) oder der erste Haftkraftwert als auch der zweite Haftkraftwert ist jeweils größer als die Zerreißfestigkeit der Haftvermittlerschicht (14).

## Beschreibung

Die vorliegende Anmeldung nimmt die Priorität der deutschen Patentanmeldung 10 2012 218 118.0 vom 4. Oktober 2012 in Anspruch, deren Inhalt hiermit durch Bezugnahme zum Gegenstand der vorliegenden Patentanmeldung wird.

Die Erfindung betrifft einen Gegenstand mit mehrschichtiger Außenseite, die zumindest teilweise aus einem Kunststoffmaterial besteht. Insbesondere handelt es sich bei einem solchen Gegenstand erfindungsgemäß um ein Mehrschichtrohr wie z.B. ein medienführendes (z.B. Gas-, Trink- oder Abwasser-)Rohr oder um ein Ummantelungsrohr.

Mehrschicht-Kunststoffrohre oder Mehrschicht-Kunststoff-Metall-Verbundrohre sind grundsätzlich bekannt und weisen z.B. an ihrer Außenseite eine außenliegende Kunststoffschicht auf. Genauso wie bei Rohren sind mehrschichtige (reine Kunststoff- oder Kunststoff-Metall-Verbund)Aufbauten auch bei anderen Gegenständen bekannt. Nachfolgend wird allerdings zur Beschreibung der Problemstellungen und deren Lösungen vornehmlich auf Mehrschichtrohre als Beispiel für die Anwendung der Erfindung Bezug genommen.

Im Stand der Technik ist eine Vielzahl von verschiedenartig aufgebauten Kunststoffmehrschichtrohren beschrieben, wobei die Anzahl der Schichten, deren Schichtdicken und Materialien und somit auch die Funktion jeder einzelnen Schicht für den jeweiligen Anwendungsfall ausgelegt werden. Dabei zeigt GB-A-2392220 ein Mehrschicht-Kunststoffrohr mit einem Innenrohr und einem Außenrohr, zwischen denen eine Haftvermittlerschicht angeordnet ist.

Ein umfangreicher Stand der Technik zeigt sich insbesondere bei Mehrschichtrohren mit einer Außenschicht wie beispielsweise einer haftenden Außenhülle aus einem anderen Material als das des Innen- bzw. Basisrohres. Diese Außenhülle ist so ausgeführt, dass sie zum Verbinden beim Rohrleitungsbau z.B. mittels Schweißen mindestens an den Rohrenden entfernt werden kann. Konstruktionen solcher Mehrschichtrohre sind beispielsweise in DE-A-10 2006 049 338, DE-C-41 24 825, EP-A-0 604 907, GB-A-2 323 556, GB-A-2 300 456 und WO-A-93/00212 beschrieben.

In DE-A-102 49 454 ist ein Leitungsrohr beschrieben, das von einer Außenschicht umgeben ist, wobei zwischen dem eigentlichen Rohr und der Außenschicht eine spröde Trennschicht angeordnet ist. Aufgrund ihrer Sprödizität kann die Trennschicht unbeabsichtigterweise aufbrechen, wenn das Rohr beispielsweise bei der Verlegung verbogen oder aber auf eine Haspel auf- oder von dieser abgewickelt wird. Durch die spröde Trennschicht soll die Außenschicht an einem Anschlussende des Rohres leichter von diesem getrennt werden können, um das Rohr beispielsweise verschweißen, verlöten (bei z.B. einem Kupferrohr) oder mit einem Fitting versehen zu können.

In DD-A-279 052 ist ein von Kunststoff ummanteltes Stahlrohr beschrieben, bei dem auf einer das Stahlrohr umgebenden Haftvermittlerschicht eine Trennschicht angeordnet ist, die von der Kunststoffummantelung umgeben ist.

In DE-C-197 41 035 ist ein Sanitär- oder Heizungsrohr mit außen liegender Flammschutzschicht beschrieben. Zwischen dieser Flammschutzschicht und dem Rohr befindet sich eine Trennschicht. Durch Ziehen an einem axial zum Rohr verlaufenden Aufreißfaden lässt sich die Flammschutzschicht an z.B. dem Anschlussende des Rohres aufbrechen und damit ablösen.

Kunststoff-Mehrschichtrohre der zuvor genannten Art für den Transport von Trinkwasser, Gas und Abwasser gehören zur Gruppe der sogenannten Schutzmantelrohre, die additive Schutzschichten aufweisen. Dabei besteht der eigentliche Zweck des Schutzmantels bzw. des Hüllrohres darin, das darunterliegende Innenrohr bei der Freilagerung vor Oxidation der Außenfläche des Innenrohres durch Witterungseinflüsse wie z.B. UV-Strahlung zu schützen und beim Transport sowie beim Rohrleitungsbau selbst mögliche Beschädigungen zu vermeiden. Dadurch soll zum einen jegliche Schwächung der mechanischen Eigenschaften des Innenrohres vermieden werden und zum anderen eine schmutz-, kratzer- und riefenfreie Oberfläche für das normgerechte Verschweißen beim Verbinden der Rohre gewährleistet werden. Derartige Rohre aus z.B. thermoplastischen Polyolefinen, vorzugsweise Polyethylen oder Polypropylen, sollten also für moderne Verlegeverfahren mit einer vor vielerlei Beschädigungen ihrer äußeren Oberflächen schützenden und (im Bedarfsfall notwendigerweise) entfernbaren Außenhülle überzogen sein.

Insbesondere Schutzmantelrohre, die der Versorgung, Entsorgung und dem Transport von Gas, Trink- und Prozess- sowie Abwässern dienen, sind derart ausgeführt, dass das Innenrohr von einem farbigen Schutzmantel (dem Hüllrohr) konzentrisch umhüllt ist.

In den meisten Fällen erfolgt die Herstellung solcher Rohre derart, dass ein Kern- bzw. Innenrohr aus einer thermoplastischen Formmasse extrudiert wird. Verfahrenstechnisch werden zwei Varianten zur Herstellung solcher Rohre unterschieden. Beispielsweise beschreibt DE-T693 18 813 die Ausbildung eines mindestens zweischichtigen Rohres mittels Co-Extrusion, also direkt in ein und demselben formgebenden Extrusionswerkzeug, wobei verfahrenstechnisch bedingt zwangsweise im Anschluss an die Formgebung eine gleichzeitige Kalibrierung von genormtem Innenrohr sowie Schutzmantel erfolgen muss.

Eine andere verfahrenstechnische Variante zur Ausbildung eines Mehrschichtrohres mit Schutzmantel ist derart gekennzeichnet, dass zunächst das Kern- bzw. Innenrohr extrudiert und anschließend nach der Formgebung normgerecht auf Maß kalibriert wird und erst nach Abkühlung des Rohres bis unter die Schmelztemperatur der thermoplastischen Formmasse des Kernrohres mittels einer weiteren Extrusionseinrichtung der Schutzmantel an einer späteren Stelle im Herstellungsprozess aufextrudiert wird.

Die zu beachtenden Randbedingungen bei Schutzmantelrohren sind wie folgt:
- Die kratzfeste Außenhülle der Schutzmantelrohre besteht in der Regel, damit sie vom Kern- bzw. Innenrohr mindestens an den Enden entfernbar ist, aus einer zum Kernrohr nicht kompatiblen bzw. chemisch anders aufgebauten Formmasse. So wird erreicht, dass keine stoffschlüssige Verschweißung der Schichten bei der Herstellung des Rohrs entsteht. Hierdurch kann sich in der Praxis der Nachteil ergeben, dass zwar zum einen die gewünschte Ablösbarkeit des Mantels erreicht wird, zum anderen aber oftmals eine unzureichende Haftung zwischen der Außenhülle und dem Kernrohr vorliegt. Dies kann zu einer Delamination der Schichten bei der Verlegung, beispielsweise beim Einziehen solcher Rohre in zuvor gebohrte Tunnel oder bereits bestehende alte Rohrleitungen führen. Auch beim Transport oder dem Wickeln der Rohre auf Trommeln oder als Ringbund kann eine unzureichende Haftung zwischen den Schichten große Probleme wie das Ablösen oder Faltenwurf in der Außenschicht verursachen.
- Eine im Stand der Technik bekannte Vorgehensweise zur Erzeugung der notwendigen Haftung bei solchen Rohren besteht darin, die Materialien so auszuwählen, dass während der Herstellung eines Mehrschichtrohres durch Aufextrusion die für den Schutzmantel verwendete Formmasse beim Erkalten eine starke Volumenkontraktion erfährt und beim Erstarren auf das Kern- bzw. Innenrohr aufschrumpft. Hierbei
   - können lediglich ebensolche Mantelmaterialien eingesetzt werden, die beim Erkalten stark schrumpfen;
   - kann die Temperaturführung (wird bestimmt durch Massetemperaturen, Kühlwassertemperaturen und Liniengeschwindigkeit etc.) im Prozess entscheidenden Einfluss auf die resultierende Schrumpfspannung nehmen und nicht immer genau eingehalten bzw. reproduziert werden;
   - kann die auf diese Weise erzeugte Schrumpfspannung stark von den einzelnen Schichtdicken des Mehrschichtrohres, insbesondere der Mindestdicke der Außenhülle, sowie dem jeweiligen Außendurchmesser des Kernrohres mitbestimmt sein;
   - können, wie beispielsweise in DE-C 41 24 825, DE-U-20 2005 014 630 und DE-T-693 18 813 beschrieben ist, dem Mantelmaterial beigemischte (insbesondere anorganische) Füllstoffe wie Glaskugeln, Mineralien oder Sand zur Erhöhung der Abrasionsfestigkeit sowie der Härte oder Additive zur UV-Stabilisierung verwendet werden, die keine Volumenkontraktion beim Abkühlen des Mantelmaterials zeigen und somit die je nach Füllgrad die Haftung des Mantels auf dem Kernrohr notwendige Schrumpfspannung erheblich reduzieren, wodurch sich eine Limitierung hinsichtlich des Füllgrades ergibt, wobei hohe Füllgrade zu deutlich verbesserten Kratzfestigkeiten führen würden.
- Bei einer weiteren im Stand der Technik (z.B. GB-A-2 323 556) bekannten Vorgehensweise zur Erzeugung der notwendigen Haftung wird der Schutzmantel bei der Herstellung eines Mehrschichtrohres mittels Co-Extrusion aufgebracht. Hierzu sei angemerkt, dass hierbei nachteilig ist,
   - dass nur ebensolche Formmassen für den Mantel und das Kernrohr eingesetzt werden können, die gemeinsam in einem Extrusionswerkzeug extrudiert werden können und deshalb ähnliche Schmelztemperaturen und rheologisches Fließverhalten aufweisen müssen;
   - dass die für die Rohrextrusion typische Kalibrierung des Rohraußendurchmessers und die in der Norm festgelegten Außendurchmesserzu-Wanddicken-Verhältnisse keine freie Ausgestaltung der Schichtdicke des Schutzmantels zulassen könnten (so würde bei einer auf die Extrusion folgenden gemeinsamen Außendurchmesserkalibrierung von Kernrohr inklusive Schutzmantel eine schrittweise Erhöhung der Mantelschichtdicke zu einem immer kleineren Kernrohr führen, wenn nicht die Kernrohrwanddicke reduziert wird);
   - dass das gleichzeitige Einspritzen der schmelzflüssigen Formmassen in das Extrusionswerkzeug unter nennenswerten Drücken geschieht und sich somit zum einen weniger glatte Oberflächen des Kernrohres ergeben und zum anderen diese angesprochenen Unebenheiten zu einer Art Formschluss von Schutzmantel und Kernrohrmaterial auf mikroskopischer Ebene führen könnten. Dadurch könnte die Haftung des Schutzmantels extrem und das gewünschte Abschälen des Mantels bei der Verwendung der Rohre deutlich erschwert werden.

Aufgabe der Erfindung ist es, ein Mehrschichtrohr bzw. allgemein einen Gegenstand mit mehrschichtig aufgebauter Außenseite anzugeben, das bzw. der über verbesserte Herstellungs- und Handhabungseigenschaften ohne nennenswerte Einbußen verfügt.

Zur Lösung dieser Aufgabe wird mit der Erfindung ein Gegenstand mit einer Außenseite, die zumindest teilweise aus einem Kunststoffmaterial besteht, insbesondere Mehrschichtrohr, vorgeschlagen, wobei der Gegenstand versehen ist mit
- einem Innenkörper, insbesondere Basisrohr, der eine Außenfläche aufweist,
- einer Kunststoff-Außenschicht, insbesondere Hüllrohr, die zumindest innerhalb eines Teilbereich der Außenfläche des Innenkörpers diesen überdeckt, und
- einer zwischen der Außenfläche des Innenkörpers und der Außenschicht angeordneten, eine Zerreißfestigkeit aufweisenden Kunststoff-Haftvermittlerschicht zur Fixierung der Außenschicht an der Außenfläche des Innenkörpers durch Erzeugung von Haftkräften zur Außenfläche des Innenkörpers und zur Außenschicht.

Bei dem Gegenstand bzw. Rohr ist erfindungsgemäß vorgesehen,
- dass die Haftkraft der Haftvermittlerschicht zur Außenfläche des Innenkörpers einen ersten Haftkraftwert und die Haftkraft der Haftvermittlerschicht zur Außenschicht einen zweiten Haftkraftwert aufweist und
- dass der erste Haftkraftwert größer ist als der zweite Haftkraftwert und zusätzlich der erste Haftkraftwert kleiner sowie der zweite Haftkraftwert größer als die Zerreißfestigkeit der Haftvermittlerschicht ist,
   oder
- dass sowohl der erste Haftkraftwert als auch der zweite Haftkraftwert jeweils größer als die Zerreißfestigkeit der Haftvermittlerschicht ist.

Das erfindungsgemäße Konzept eines Mehrschichtaufbaus für insbesondere medienführende Rohre mit Schutzmantel bzw. für Gegenstände, die ebenfalls über eine im Bedarfsfall einfach abziehbare Außenschicht verfügen sollen, sieht die Abstimmung der Haftkräfte einer Haftvermittlerschicht zu seinen beiden Nachbarschichten (die nicht notwendigerweise beide aus Kunststoff bestehen müssen, z.B. könnte die auf der Anordnung der Haftvermittlerschicht bezogen innenliegende Schicht eine Metallschicht als z.B. Diffusionssperrschicht sein, während die Außenschicht Kunststoff aufweist) und die Zerreißfestigkeit des Haftvermittlers in der oben angegebenen Weise vor. Damit wird erreicht, dass beim Abziehen bzw. Abschälen der Außenschicht entweder die gesamte Haftvermittlerschicht oder ein Teil (d.h. eine Teillage) des Haftvermittlers auf dem Innen- bzw. Kernrohr verbleibt, was anzeigt, dass die Außenschicht entfernt ist. Wenn es (aus welchen Gründen auch immer) erforderlich ist, dass der gesamte Haftvermittler in zumindest einem Teilbereich der Außenseite des Gegenstands entfernt werden muss (bei einem Schutzmantelrohr etwa müssen die Haftvermittlerschicht und die Außenschicht entfernt sein und damit die Außenfläche des Innenrohres freiliegen, damit dies durch z.B. Verschweißen mit einem benachbarten Innenrohr verbunden werden kann), so ist dies dadurch einfach zu erkennen, dass sich keine Reste der Haftvermittlerschicht mehr auf dem Innenkörper (Innenrohr) befinden. Eine solche (mehrstufige) Anzeige der Abschälgrad-Zustände eines Schutzmantelrohrs ist also z.B. aus Qualitätssicherungsgründen durchaus von Vorteil bei der Lagerung und Handhabung der Rohre bzw. Gegenstände.

Bei dem erfindungsgemäß ummantelten Gegenstand, insbesondere Rohr, übernimmt die Haftvermittlerschicht zwei Aufgaben, nämlich neben der Haftung der Außenschicht an dem Gegenstand auch die Vereinfachung der Trennung beider, wenn ein Bereich des Gegenstandes durch Entfernen der Außenschicht freigelegt werden soll. Dabei ist die Haftvermittlerschicht elastisch und flexibel, so dass sie weder beim Verformen des Gegenstandes (z.B. Verlegen eines Rohres bzw. Auf- oder Abwickeln desselben) zerstört wird. Insbesondere ist der Haftvermittler nicht spröde; auch zerfällt er nicht in einzelne Stücke bzw. Partikel, wenn die Außenschicht vom Gegenstand abgezogen wird. Dies vereinfacht die Handhabung des Gegenstandes beim Freilegen von Bereichen desselben.

Zur weiteren verbesserten Signalisierung des entfernten Schutzmantels kann die Haftvermittlerschicht eine von den Farben des Innenkörpers und der Außenschicht verschiedene Farbe aufweisen. Somit kann nach dem Entfernen der Außenschicht an z.B. dem Anschlussende eines Rohres durch optische Inspektion und damit auf einfache Weise erkannt werden, ob sich noch Reste von Haftvermittler auf dem Innenkörper befinden. Auch können so im Nachhinein bei nicht vorschriftsmäßigen Rohrverbindungen überprüft werden, ob das Rohr an seinem Anschluss-/Verbindungsende ordnungsgemäß für eine (z.B. Schweiß-) Verbindung vorbereitet wurde (Verarbeitungsqualitätsnachverfolgung).

Zweckmäßigerweise lässt sich die Zerreißfestigkeit der Haftvermittlerschicht durch Integration einer Solltrennschicht in die Haftvermittlerschicht einstellen, die z.B. beim Aufbringen des Haftvermittlers mit extrudiert wird. Man könnte zunächst aber auch eine erste Lage des Haftvermittlers, gefolgt von einer Aufextrusion des Materials der Trennschicht aufbringen, um dann danach eine zweite Lage des Haftvermittlers auf die Trennschicht aufzubringen.

Die Zerreißfestigkeit der Haftvermittlerschicht kann alternativ durch ein dem Material der Haftvermittlerschicht zugegebenes Additiv wie z.B. ein anderes Kunststoffmaterial als das der Haftvermittlerschicht, Kreide, Talkum o.dgl. eingestellt werden.

Schließlich ist es auch möglich dass dem Material der Haftvermittlerschicht zur selektiven Erwärmung derselben unter im Wesentlichen nicht erfolgender Erwärmung der Außenfläche des Innenkörpers und der Außenschicht durch Induktion magnetische bzw. magnetisierbare Partikel, z.B. ferromagnetische Partikel beigemischt sind.

Der Innenkörper, die Haftvermittlerschicht und die Außenschicht können z.B. durch Co-Extrusion und/oder sequentielles Extrusion bzw. Co-Extrusion oder spritzgusstechnisch hergestellt sein.

Ferner wird zur Lösung der obigen Aufgabe ein Verfahren zur Bearbeitung eines Gegenstandes mit einem Innenkörper, insbesondere Basisrohr, der eine Außenfläche aufweist, einer Kunststoff-Außenschicht, insbesondere Hüllrohr, und einer Kunststoff-Haftvermittlerschicht zur Haftung der Außenschicht an der Außenfläche des Innenkörpers vorgeschlagen, wobei bei dem Verfahren
- zur Sichtbarmachung mindestens eines von dem Innenkörper abgezogenen Teilbereichs der Außenschicht die Zerreißfestigkeit der Haftvermittlerschicht und deren Haftkräfte zu der Außenschicht und der Außenfläche des Innenkörpers derart gewählt werden, dass beim Abziehen zumindest eines Teilbereichs der Außenschicht von dem Innenkörper auf dessen Außenfläche zumindest ein Teil der Haftvermittlerschicht als Indikator verbleibt.

Hierbei kann vorgesehen sein, dass zur optischen Anzeige, dass der zuvor von der freiliegenden Haftvermittlerschicht überdeckte Teilbereich der Außenfläche des Innenkörpers von Haftvermittlerschicht befreit ist, ein Teilbereich der freiliegenden Haftvermittlerschicht bis zum Innenkörper entfernt wird und benachbart zu diesem Teilbereich ein weiterhin freiliegender Teilbereich der Haftvermittlerschicht verbleibt.

Nachdem das Freilegen der Außenfläche des Basisrohres durch das Abschälen oder Abziehen der Außenschicht (z.B. Schutzmantel) unter Verbleib von Material der (vorzugsweise eingefärbten) Haftvermittlerschicht auf dem Innenrohr erfolgt ist, wird dann, wenn z.B. eine Verschweißung erfolgen soll, der Rest der Haftvermittlerschicht entfernt, was zweckmäßigerweise durch Abdrehen bzw. Abschälen des restlichen Materials der Haftvermittlerschicht erfolgt. Daher kann das gesamte restliche Haftvermittlermaterial oder auch nur ein Teil davon entfernt werden, wobei im letztgenannten Fall zumindest diejenige Fläche der Außenseite des Innenrohres freizulegen ist, wie es für die Verschweißung erforderlich ist. Damit würde man also bei Betrachtung z.B. des Rohrendes einen freiliegenden Abschnitt des Innenrohres benachbart zum nach dem Abziehen der Außenschicht noch verbliebenen Rest an Haftvermittler und daneben die Außenschicht des Rohres erkennen können.

Die Erfindung wird nachfolgend anhand eines Ausführungsbeispiels und unter Bezugnahme auf die Zeichnung näher erläutert. Im Einzelnen zeigen dabei:
- Fig. 1: eine perspektivische Schnittansicht eines Dreischichtrohres,
- Fig. 2: eine zeichnerische Darstellung einer möglichen Situation beim Abziehen der Außenschicht,
- Fig. 3: eine Seitenansicht auf ein Rohrende mit über eine erste axiale Länge abgezogenem Schutzmantel und
- Fig. 4: eine Seitenansicht auf das Rohrende gemäß Fig. 3, nachdem das Rohr am äußersten Stirnende über eine kleinere zweite Länge gänzlich von Haftvermittlermaterialresten befreit ist.

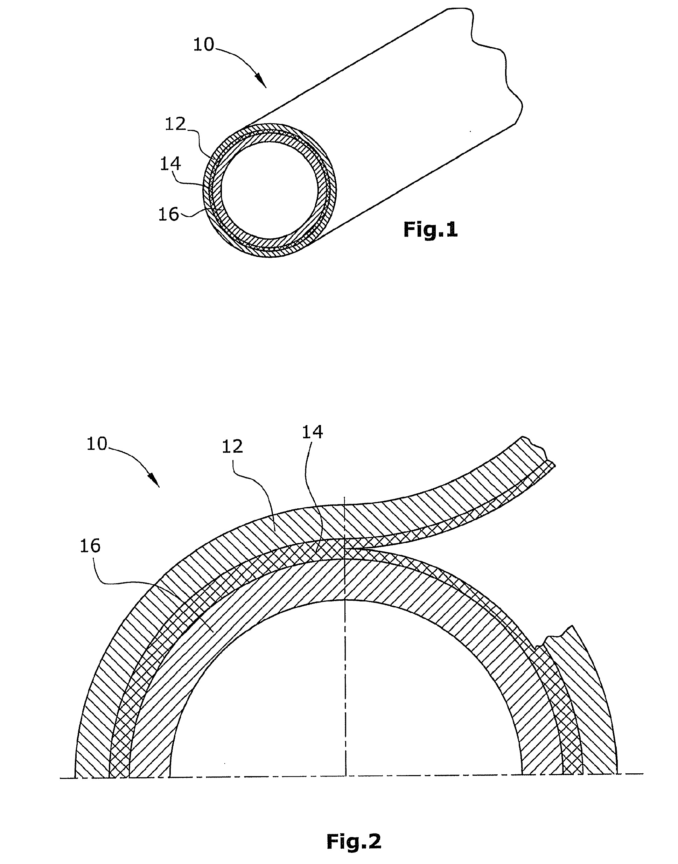

Fig. 1 zeigt ein Mehr-(Drei-)Schichtrohr 10 mit einer Kunststoff-Außenschicht 12, die durch eine Kunststoff-Haftvermittlerschicht 14 mit einem Basisrohr 16 verbunden ist. Das Basisrohr 16 kann aus Kunststoff (gegebenenfalls in mehreren Schichten) oder aber als Kunststoff-Metall-Verbundrohr ausgebildet sein.

Zweck der z.B. aus Polypropylen bestehenden Außenschicht 12 ist es, das z.B. aus Polyethylen bestehende Basisrohr 16 vor Beschädigungen oder Korrosionen zu schützen, was für die Verschweißbarkeit des Rohres von Vorteil ist. D.h., dass die Außenschicht 12 sich im Bedarfsfall von dem Basisrohr 16 abziehen lassen muss. Derartige Schutzmantelrohre sind grundsätzlich bekannt. Zur Erleichterung des Abziehens z.B. eines Umfangsstreifens der Außenschicht an einem Rohrende ist es bekannt, Aufreißhilfen vorzusehen.

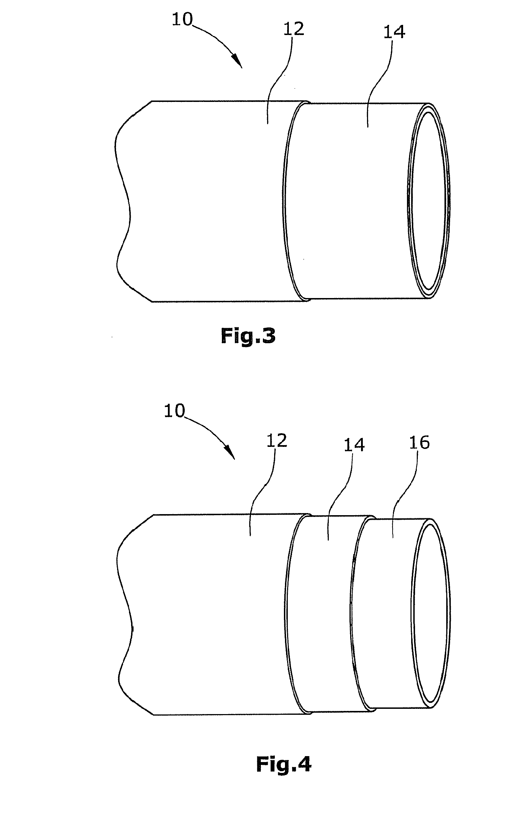

Die Haftvermittlerschicht 14 weist z.B. ein Haftvermittlermaterial auf, das eine Haftung zu sowohl dem Basisrohr 16 als auch der Außenschicht 12 aufweist, die beide größer sind als die Zerreißfestigkeit des Haftvermittlermaterials. Damit verbleibt beim Abziehen der Außenschicht 12 ein Teil der Haftvermittlerschicht 14 infolge Delamination auf dem Basisrohr 16, wie es in den Fign. 2 und 3 gezeigt ist. Somit ist nach dem Abziehen der (Schutz-)Außenschicht 12 erkennbar, dass das Basisrohr 16 noch nicht vollständig für die Verschweißung vorbereitet ist, d.h. dass das Basisrohr 16 in dem zu verschweißenden Bereich noch nicht gänzlich freigelegt ist.

Die Delamination der Haftvermittlerschicht 14 kann durch eine Beeinflussung (Einstellung) der (inneren) Zerreißfestigkeit des (z.B. polymeren) Haftvermittlermaterials durch Additive (z.B. Kreide, Talkum) hervorgerufen werden. Auch kann man in die Haftvermittlerschicht 14 eine Trennschicht (Delaminierschicht) integrieren.

Es ist auch möglich, dass sowohl die innere Zerreißfestigkeit der Haftvermittlerschicht 14 als auch deren Haftung an dem Basisrohr 16 größer gewählt werden als die Haftung der Haftvermittlerschicht 14 zur Außenschicht 12, was bedeutet, dass beim Abziehen der Außenschicht 12 im Wesentlichen die gesamte Haftvermittlerschicht 14 auf dem Basisrohr 16 verbleibt.

Fig. 3 zeigt, dass die erst teilweise vorgenommene Vorbereitung des Rohres 10 zum Freilegen des Basisrohrs 16 von außen erkannt werden kann, wobei man durch Einfärben des Haftvermittlermaterials diesen optischen Effekt noch weiter verstärken kann. Erst wenn das Rohr(ende), wie in Fig. 4 gezeigt, einen Axialabschnitt 18 aufweist, der vom Haftvermittlermaterial gänzlich befreit ist, ist signalisiert, dass das Basisrohr 16 zur Durchführung eines nachfolgenden Prozesses vorbereitet ist.

Die Herstellung des Rohres 10 kann z.B. durch Co-Extrusion sämtlicher drei Schichten erfolgen. Alternativ kann zunächst das Basisrohr 16 extrudiert werden, um dann (z.B. nach einer Kalibrierung des Basisrohres 16) die Haftvermittlerschicht 14 und die Außenschicht 12 gemeinsam aufzuextrudieren. Eine weitere Möglichkeit besteht darin, das Basisrohr 16, die Haftvermittlerschicht 14 und die Außenschicht 12 nacheinander zu extrudieren.

Anstelle der Extrusion der Außenschicht 12 auf die Haftvermittlerschicht 14 kann das Material der Außenschicht 12 auch durch andere Techniken, z.B. durch Sprühen, Tauchen oder Lackieren auf das Basisrohr 16 aufgebracht werden. Entsprechendes gilt für die möglichen Techniken zum Aufbringen der Haftvermittlerschicht 14 auf dem Basisrohr 16.

Mit der Erfindung ist es möglich, unter Berücksichtigung wirtschaftlicher Gesichtspunkte (mittels kostengünstigem Aufextrusionsverfahren) ein (mindestens dreischichtiges) Mehrschichtrohr, vorzugsweise nach den oben beschriebenen Verfahrensvarianten herzustellen, wobei die äußerste Hülle mindestens an den Rohrenden entfernt werden kann.

Ein weiteres Merkmal der Erfindung ist es, eine mindestens dreischichtige Kunststoffrohrkonstruktion zu kreieren, die dadurch gekennzeichnet ist, dass die zum Entfernen der Außenschicht (nachfolgend auch Schutzmantel genannt) mittels Abziehen (auch Schälen bzw. Peelen genannt) notwendige Kraft in weiten Grenzen durch Auswahl geeigneter Werkstoffkombination eingestellt werden kann.

Ferner ist ein weiterer Aspekt der Erfindung darin zu sehen, dass nach dem Abziehen des Schutzmantels ein bzw. der dünne Film z.B. einer Haftvermittlerschicht auf dem Basisrohr (nachfolgend auch Kernrohr genannt) und auch (aber nicht zwingend notwendig) auf dem abgezogenen Schutzmantel zurückbleibt. Insbesondere die auf dem Kernrohr verbleibende dünne Schicht kann dann als Indikatorschicht genutzt werden und sogar bewusst mit einer auffälligen Farbe durch Zumischen von Farbstoff zum Haftvermittlermaterial ausgestaltet sein. Zur Vorbereitung einer Schweißverbindung zweier Rohrenden wird typischerweise vom Kernrohr nach dem Entfernen des Schutzmantels mit z.B. einem Rotationsschälgerät ein umlaufender Span abgenommen, um eine potentielle Oxidhaut und Unebenheiten zu entfernen. Auf bzw. an der so frisch geschaffenen Oberfläche darf geschweißt werden. Die oben erwähnte Indikatorschicht (als Teil der Haftvermittlerschicht oder in Form der gesamten Haftvermittlerschicht) erlaubt es, diesen Vorgang nachzuweisen und deutlich sichtbar zu machen.

Im Detail lässt sich die Erfindung wie folgt beschreiben, vorausgesetzt, dass zum Zerreißen des Schutzmantels und/oder des Kernrohrs jeweils höhere Kräfte notwendig sind als zum Trennen des Rohrverbundes zwischen den einzelnen Schichten.
- Die Erfindung sieht einen mindestens dreischichtigen Rohraufbau vor, wobei die beiden äußeren Schichten, nämlich der Schutzmantel und eine Haftvermittlerschicht, z.B. mittels Aufextrusion auf ein Kernrohr, das die innerste Schicht (d.h. das Basisrohr) des Mehrschichtrohres bildet, aufgebracht werden. Dabei sind die Formmasse(n) der Haftvermittlerschicht so gewählt, dass ihre jeweilige Zerreißfestigkeit von sich aus oder durch einfaches Zumischen von Füllstoffen wie beispielsweise Kreide, Talkum oder einem Polymer, derart modifiziert wird/werden, dass zumindest eines der beiden folgenden Fälle bezüglich der Verbundhaftungen im Dreischichtrohr eingestellt werden kann:
   1. Die Haftkraft zwischen der Kernrohrschicht und der Haftvermittlerschicht sowie auch die Haftkraft zwischen dem Schutzmantel und der Haftvermittlerschicht sind jeweils größer als die Zerreißfestigkeit der Formmasse, die die Haftvermittlerschicht darstellt. Beim Abziehen des Schutzmantels bleiben dann also Rückstände der Haftvermittlerformmasse auf den Oberflächen des Kernrohres und des abgezogenen Schutzmantels.
   2. Die Haftkraft zwischen dem Kernrohr und der Haftvermittlerschicht ist größer als die Zerreißfestigkeit der Formmasse, die die Haftvermittlerschicht darstellt, wobei die Haftkraft zwischen dem Schutzmantel und der Haftvermittlerschicht geringer ist als die Zerreißfestigkeit der Haftvermittlerformmasse und auch geringer als die Haftkraft zwischen der Haftvermittlerschicht und dem Kernrohr. Beim Abziehen des Schutzmantels bleibt dann also die gesamte Haftvermittlerformmasse auf der Oberfläche des Kernrohres zurück.
- Der Schutzmantel kann vorzugsweise aus einer thermoplastischen und extrudierbaren Formmasse bestehen; andere Werkstoffe, insbesondere Kunststoffe, die mittels Lackier-, Tauch- oder Sprühtechniken auftragbar sind, sind jedoch nicht ausgeschlossen.
- Die für den Schutzmantel eingesetzte Formmasse wird vorzugsweise aus einer zum Kernrohr, welches vorzugsweise aus Polyethylen besteht, nicht kompatiblen, also nicht mit der Formmasse des Kernrohrs direkt verschweißbaren Polymerspezies gebildet. Beispiele hierfür wären andere Polyolefine, z.B. Polypropylen, Polyamide, Polyester wie z.B. Polyethylenterephthalat (PET) oder Polybutylenterephthalat (PBT) oder thermoplastische Polyurethane (TPU). Mit der Dreischichtrohrkonstruktion wäre auch eine Variante gegeben bzw. möglich, bei der die Formmasse des Schutzmantels der des Kernrohres entspricht.
- Die für den Schutzmantel eingesetzte Formmasse sollte hinsichtlich ihrer mechanischen Eigenschaften und Abrasionsresistenz weder die Verlegung der Rohre durch z.B. notwendig werdende größere Biegeradien erschweren.
- Der Schutzmantel sollte vorzugsweise farbig ausgestaltet sein, kann mit axial verlaufenden Signalstreifen oder ohne Streifen ausgestaltet sein und kann in einer weiteren Variante aus einer optisch transparenten Formmasse bestehen (siehe die europäische Patentanmeldung 13 185 558.7 vom 23. September 2013, deren Inhalt hiermit durch Bezugnahme zum Gegenstand dieser Anmeldung gemacht wird).
- Die für die haftvermittelnde Schicht und den Schutzmantel eingesetzten Formmassen sollen vorzugsweise aus thermoplastischen und extrudierbaren Formmassen bestehen, andere Werkstoffe insbesondere Kunststoffe, die mittels Lackier-, Tauch- oder Sprühtechniken auftragbar sind, sollen jedoch nicht ausgeschlossen werden. Die Haftvermittlerschicht kann optisch transparent sein.
- Der für die haftvermittelnde Schicht eingesetzten Formmasse können, wenn notwendig, andere Thermoplaste, Additive und/oder Füllstoffe wie z.B. Kreide, Talkum oder ähnliches zugesetzt werden, um ihre Zerreißfestigkeit gezielt herabzusetzen. Auch soll es möglich sein, farbgebende Pigmente in geringer Konzentration hinzuzufügen.
- Die haftvermittelnde Schicht kann durch Zugabe von Füllstoffen wie etwa mikroskopisch kleine ferromagnetische Partikel (wird im Rahmen der Erfindung ebenfalls als ein Additiv aufgefasst) wie beispielsweise Eisenoxid derart modifiziert sein, dass beim Anlegen eines äußeren magnetischen Feldes eine gezielte und auf die haftvermittelnde Schicht selektiv begrenzte induktive Erwärmung erfolgt, so dass die haftvermittelnde Schicht stark erweicht oder sogar aufschmilzt. Dadurch würde es möglich, den Schutzmantel leicht und ohne Kraftaufwand vom Kernrohr abzuziehen. Die WO-A-01/85827 beschreibt die grundsätzliche Eignung mittels ferromagnetischer Partikel und Induktionserwärmung Kunststoffe miteinander zu verschweißen. Gemäß dieser Variante der Erfindung wird die gezielte Erwärmung mittels Induktion genutzt, um die Zerreißkraft und die Haftkräfte zu dem Kernrohr und dem Schutzmantel durch Erwärmen gezielt herabzusetzen, um ein leichteres Abziehen des Schutzmantels zu erreichen.
- Zu den wesentlichen Merkmalen eines Verfahrens zur Herstellung des Dreischichtrohres gehört der Einsatz von Mischungen als Haftvermittlerschicht (Haftvermittler und Additive wie oben beschrieben) sowie die Aufextrusion als Herstellverfahren zur Ausbildung des Schutzmantels.
- Der beschriebene Dreischichtverbund ließe sich auch bei nicht rotationssymmetrischen Bauteilen wie beispielsweise Bögen oder nicht extrudierbaren Geometrien wie T-Stücken realisieren, indem ein zuvor hergestelltes Formteil zuerst mit dem Haftvermittler bzw. einer Haftvermittlermischung überzogen wird (Sprüh-, Lackier- oder Gieß- bzw. Tauchtechniken) und anschließend der Schutzmantel in gleicher Weise wie die Haftvermittlerschicht ausgestaltet wird.
- Eine weitere Alternative wäre das Prinzip der einstellbaren Haftung durch Haftvermittlermischungen auf Vierschichtrohre zu übertragen, wobei die vierte Schicht beispielsweise eine auf das Kernrohr aufgebrachte Sperrschicht aus z.B. Aluminium ist, die entweder vom Kernrohr rückstandsfrei zusammen mit dem Schutzmantel abziehbar ist oder unbeschädigt auf dem Kernrohr verbleibt, wenn der Schutzmantel abgezogen wird.

Gegenüber dem Stand der Technik ergeben sich durch die Erfindung damit folgende Vorteile:
- Die zum Abziehen bzw. Schälen des Schutzmantels notwendige Kraft kann gezielt über die Mischung von Haftvermittler mit Füllstoffen oder anderen Haftvermittlern eingestellt werden, so dass die erzielten Ergebnisse reproduzierbar und weitestgehend unabhängig von Herstellparametern wie Temperaturführung, Liniengeschwindigkeiten und Schichtdicken erzielt werden.
- Es wird möglich, die Haftvermittlerschicht so zu gestalten und die Haftung zwischen den Schichten so einzustellen, dass nach dem Abziehen des Mantels eine deutlich sichtbare Signalschicht auf dem Kernrohr zurückbleibt und diese dazu genutzt wird, die regelkonforme Bearbeitung der Kenrohroberfläche vor dem Verbinden der Rohre (z.B. durch Schweißen oder durch andere Verbindungs-(Füge-)techniken) nachzuweisen. Dies bedeutet eine Reduzierung von möglichen Schadensfällen wegen unsachgemäßer Verlegung.
- Aufwändige Extrusionswerkzeuge wie bei der Co-Extrusion solcher Dreischichtverbunde werden nicht benötigt und die Fließeigenschaften und Schmelzpunkte der für das Kernrohr und den Schutzmantel gewählten Formmassen können in weiten Grenzen variiert werden, so dass neuartige Verbundrohrvarianten möglich werden.

### BEZUGSZEICHENLISTE

- 10: Mehr-(Drei-)Schichtrohr
- 12: Kunststoff-Außenschicht
- 14: Kunststoff-Haftvermittlerschicht
- 16: Basisrohr
- 18: Axialabschnitt am Ende des Rohres

## Patentansprüche

1. Gegenstand mit einer Außenseite, die zumindest teilweise aus einem Kunststoffmaterial besteht, insbesondere Mehrschichtrohr, mit
- einem Innenkörper (16), insbesondere Basisrohr, der eine Außenfläche aufweist,
- einer Kunststoff-Außenschicht (12), insbesondere Hüllrohr, die zumindest innerhalb eines Teilbereichs der Außenfläche des Innenkörpers diesen überdeckt, und
- einer zwischen der Außenfläche des Innenkörpers (16) und der Außenschicht(12) angeordneten, eine Zerreißfestigkeit aufweisenden Kunststoff-Haftvermittlerschicht (14) zur Fixierung der Außenschicht (12) an der Außenfläche des Innenkörpers (16) durch Erzeugung von Haftkräften zur Außenfläche des Innenkörpers (16) und zur Außenschicht (12),
**dadurch gekennzeichnet,**
- **dass** die Haftkraft der Haftvermittlerschicht (14) zur Außenfläche des Innenkörpers (16) einen ersten Haftkraftwert und die Haftkraft der Haftvermittlerschicht (14) zur Außenschicht (12) einen zweiten Haftkraftwert aufweist und
- **dass** der erste Haftkraftwert größer ist als der zweite Haftkraftwert und zusätzlich der erste Haftkraftwert kleiner sowie der zweite Haftkraftwert größer als die Zerreißfestigkeit der Haftvermittlerschicht (14) ist,
oder
- **dass** sowohl der erste Haftkraftwert als auch der zweite Haftkraftwert jeweils größer als die Zerreißfestigkeit der Haftvermittlerschicht (14) ist.

2. Gegenstand nach Anspruch 1, **dadurch gekennzeichnet, dass** die Haftvermittlerschicht (14) eine von den Farben des Innenkörpers (16) und der Außenschicht (12) verschiedene Farbe aufweist.

3. Gegenstand nach Anspruch 1 oder 2, **dadurch gekennzeichnet, dass** die Zerreißfestigkeit der Haftvermittlerschicht (14) durch Integration einer Solltrennschicht in die Haftvermittlerschicht (14) eingestellt ist.

4. Gegenstand nach Anspruch1 oder 2, **dadurch gekennzeichnet, dass** die Zerreißfestigkeit der Haftvermittlerschicht (14) durch ein dem Material der Haftvermittlerschicht (14) zugegebenes Additiv wie z.B. ein anderes Kunststoffmaterial als das der Haftvermittlerschicht, Kreide, Talkum o.dgl. eingestellt ist.

5. Gegenstand nach Anspruch 1 oder 2, **dadurch gekennzeichnet, dass** dem Material der Haftvermittlerschicht (14) zur selektiven Erwärmung derselben unter im Wesentlichen nicht erfolgender Erwärmung der Außenfläche des Innenkörpers (16) und der Außenschicht (12) durch Induktion magnetische bzw. magnetisierbare Partikel beigemischt sind.

6. Gegenstand nach einem der Ansprüche 1 bis 5, **dadurch gekennzeichnet, dass** der Innenkörper (16), die Haftvermittlerschicht (14) und die Außenschicht (12) durch Co-Extrusion und/oder sequentielles Extrusion bzw. Co-Extrusion oder spritzgusstechnisch hergestellt sind.

7. Verfahren zur Bearbeitung eines Gegenstandes mit einem Innenkörper, insbesondere Basisrohr, der eine Außenfläche aufweist, einer Kunststoff-Außenschicht, insbesondere Hüllrohr, und einer Kunststoff-Haftvermittlerschicht zur Haftung der Außenschicht an der Außenfläche des Innenkörpers, wobei bei dem Verfahren
- zur Sichtbarmachung mindestens eines von dem Innenkörper (16) abgezogenen Teilbereichs der Außenschicht (12) die Zerreißfestigkeit der Haftvermittlerschicht (14) und deren Haftkräfte zu der Außenschicht (12) und der Außenfläche des Innenkörpers derart gewählt werden, dass beim Abziehen zumindest eines Teilbereichs der Außenschicht von dem Innenkörper (16) auf dessen Außenfläche zumindest ein Teil der Haftvermittlerschicht (14) als Indikator verbleibt.

8. Verfahren nach Anspruch 7, **dadurch gekennzeichnet, dass** zur Verbesserung der Sichtbarmachung die Farbe des Materials der Haftvermittlerschicht (14) unterschiedlich zu den Farben der Außenfläche des Innenkörpers (16) und der Außenschicht (12) gewählt wird.

9. Verfahren nach Anspruch 7 oder 8, **dadurch gekennzeichnet, dass** zur optischen Anzeige, dass der zuvor von der freiliegenden Haftvermittlerschicht (14) überdeckte Teilbereich der Außenfläche des Innenkörpers (16) von Haftvermittlerschicht (14) befreit ist, ein Teilbereich der freiliegenden Haftvermittlerschicht (14) bis zum Innenkörper (16) entfernt wird und benachbart zu diesem Teilbereich ein weiterhin freiliegender Teilbereich der Haftvermittlerschicht (14) verbleibt.
